# EUROPÄISCHE PATENTSCHRIFT

(11) **EP 1 698 863 B1**
(45) Veröffentlichungstag und Bekanntmachung des Hinweises auf die Patenterteilung: **10.06.2015**
(21) Anmeldenummer: 06003697.7
(22) Anmeldetag: 23.02.2006
(51) Int. Cl.: G01F 1/60

(54) **Verfahren zum Betreiben eines magnetisch induktiven Durchflussmessers**
Method for operating a magnetic-inductive flow meter
Procédé destiné au fonctionnement d'un débitmètre magnétique inductif

(30) Priorität: 02.03.2005 DE 102005010166
(43) Veröffentlichungstag der Anmeldung: 06.09.2006
(73) Patentinhaber: Endress+Hauser Flowtec AG, 4153 Reinach (BL) (CH)
(72) Erfinder: Wandeler, Frank, 5405 Baden-Dättwil (CH); Rüfenacht, Markus, 4143 Dornach (CH)
(74) Vertreter: Andres, Angelika Maria

(56) Entgegenhaltungen:
- EP-A- 1 217 337
- PATENT ABSTRACTS OF JAPAN Bd. 015, Nr. 352 (P-1248), 6. September 1991 (1991-09-06) -& JP 03 135730 A (SHIMADZU CORP), 10. Juni 1991 (1991-06-10)
- PATENT ABSTRACTS OF JAPAN Bd. 2003, Nr. 12, 5. Dezember 2003 (2003-12-05) & JP 2004 093525 A (HONDA MOTOR CO LTD), 25. März 2004 (2004-03-25)

## Beschreibung

Die Erfindung betrifft ein Verfahren zum Betreiben eines magnetisch induktiven Durchflussmessers.

Magnetisch induktive Durchflussmesser nutzen für die volumetrische Strömungsmessung das Prinzip der elektrodynamischen Induktion aus. Senkrecht zu einem Magnetfeld bewegte Ladungsträger des Messmediums induzieren in gleichfalls im Wesentlichen senkrecht zur Durchflussrichtung des Messmediums angeordneten Messelektroden eine Spannung. Diese Induktionsspannung ist proportional zu der über den Querschnitt des Rohres gemittelten Strömungsgeschwindigkeit des Messmediums; sie ist also proportional zum Volumenstrom. Unter der Bezeichnung Promag 53 wird ein magnetisch induktiver Durchflussmesser von der Fa. Endress + Hauser hergestellt und vertrieben.

Magnetisch induktive Durchflussmesser werden vielfach im Lebensmittel- und im Pharmabereich eingesetzt. Insbesondere in diesen Bereichen ist eine regelmäßige Reinigung des gesamten Messsystems bestehend aus dem Durchflussmesser einschließlich der Rohrleitungen notwendig. Eine Möglichkeit der Reinigung besteht darin, das eigentliche Messgerät aus dem Rohrleitungssystem auszubauen und nach dem Ausbau separat zu reinigen. Diese Reinigungsmethode ist für den Anwender sehr aufwendig und teilweise nicht praktikabel. Neuerdings wird eine Technik zum Reinigen bevorzugt, bei der ein Ausbau der Messgeräte nicht mehr notwendig ist. Diese Reinigungsmethode wird in der Automatisierungstechnik mit dem Begriff CIP (Clean in Place) bezeichnet. Für eine solche Methode gelten teilweise strenge Auflagen seitens der entsprechenden Behörden (z. B. FDA Federal Drug Association). Bei der CIP (Clean in Place) -Methode wird eine Reinigungsflüssigkeit durch das Messsystem geleitet, die für eine entsprechende Reinigung des Messgeräts einschließlich des Rohrleitungssystems sorgt. Aufgrund der unterschiedlichen physikalischen Eigenschaften des Reinigungsmediums im Gegensatz zum eigentlichen Messmedium können erhebliche Schwankungen im Messsignal auftreten. Bei derartigen Schwankungen können Messwerte nicht mehr sinnvoll gewonnen werden. Die Aufsummierung der Messwerte in einem Totalisator ist nicht mehr möglich. Einzelne Messwerte so genannte Ausreißer können das Ergebnis des Totalisators völlig verfälschen.

In der Regel ist eine Auswerteelektronik nur für ein gleich bleibendes Messmedium mit konstanten physikalischen Eigenschaften ausgelegt.

Eine Möglichkeit die bei dem Reinigungsprozess auftretenden Probleme zu beseitigen, besteht darin, das Messsignal während des Reinigungsprozesses auszublenden. Dies könnte über ein fest vorgegebenes Zeitintervall geschehen. Ein fest vorgegebenes Zeitintervall ist jedoch unpraktisch, da die Dauer des Reinigungsprozesses von der speziellen Anwendung abhängt und damit unterschiedlich lang sein kann. Das Zeitintervall müsste deshalb von Hand einstellbar sein, was für den Anwender jedoch äußerst unkomfortabel ist.

Ein weiterer Nachteil der sich durch das Ausblenden des Messsignals während des Reinigungsprozesses ergibt, besteht darin, dass keine Möglichkeit besteht die Menge der eingesetzten Reinigungsflüssigkeit zu bestimmen.
Häufig ist erwünscht bzw. bereits durch Bestimmungen vorgeschrieben, die Menge der verwendeten Reinigungsflüssigkeit ebenfalls zu festzuhalten.
Dadurch kann ein Nachweis erbracht werden, dass die Reinigungsprozedur ordnungsgemäß durchgeführt wurde. Für diese Bestimmung wären jedoch zusätzliche Einrichtungen notwendig.

Die JP03135730A offenbart ein Verfahren zur Erkennung und Unterdrückung von Messrauschen, z.B. hervorgerufen durch eine Beladung des Messmediums mit Festkörpern, bzw. zur Erkennung von elektrochemischen Störspannungen eines magnetisch induktiven Durchflussmessers. Treten Ansammlungen von Messwerten in einem gewissen, schmalen Bereich außerhalb einer festgelegten Grenze um den Mittelwert der ansonsten normal verteilten Messwerte auf, wird auf ein feststoffbeladenes Messmedium bzw. auf ein breiiges, schlammiges Messmedium geschlossen und eine Dämpfung der Messwerte wird angepasst.

Aufgabe der Erfindung ist es ein Verfahren zum Betreiben eines MID-Durchflußmessers anzugeben, das die oben angegebenen Nachteile nicht aufweist, das insbesondere auch eine sinnvolle Messung des Volumenstroms beim Einsatz einer Reinigungsflüssigkeit ermöglicht.

Gelöst wird diese Aufgabe durch das im Anspruch 1 angegebene Verfahren.

Vorteilhafte Weiterentwicklungen der Erfindung sind in den Unteransprüchen beschrieben.

Die wesentliche Idee der Erfindung besteht darin unterschiedliche Dämpfungskonstanten bei der Verarbeitung der digitalen Messsignale einzusetzen. Beim Betrieb mit dem normalen Messmedium, werden die Messsignale in einem digitalen Filter mit einer kleinen Dämpfung verarbeitet. Was eine relativ schnelle Reaktion auf Änderungen z. B. in Regelsteuerungen ermöglicht. Häufig werden MID-Durchflußmesser im Bereich der Prozess-Automatisierungstechnik eingesetzt, wo sie als Komponenten einer Regelsteuerung dienen.

Beim Betrieb mit der Reinigungsflüssigkeit wird eine größere Dämpfungskonstante gewählt. Durch die größere Dämpfung wird das Meßsystem zwar "träger" aber schnelle Messwertschwankungen werden dadurch verringert, so dass ein brauchbares Messergebnis gewonnen werden kann

Das Umschalten zwischen den beiden Dämpfungskonstanten erfolgt erfindungsgemäß automatisch. Hierzu wird ein typisches Schwankungsintervall für die Messsignalwerte bestimmt. Bildlich gesprochen lässt sich das Schwankungsintervall als ein Band darstellen, in dem die Messsignalwerte normalerweise liegen. Je Breiter das Band gewählt wird, desto unwahrscheinlicher ist es, dass ein Messsignalwert außerhalb des Bandes liegt. Nimmt der Volumenstrom zu, so folgt das Band natürlich dem aktuellen Mittelwert der Messung.

Liegen mehrere Messsignalwerte oberhalb des Schwankungsintervalls und gleichzeitig mehrere Messsignalwerte unterhalb des typischen Schwankungsintervalls, so ist dies ein starkes Indiz dafür, dass die Messsignalschwankungen erheblich zugenommen haben und damit eine Umschaltung auf die größere Dämpfungskonstante notwendig wird. Durch diese Bedingung wird sichergestellt, dass eine plötzliche Änderung des Messsignals, z. B. anwachsender Volumenstrom, nicht zu einer Umschaltung führen würde.

Durch ein Abschneiden von Messsignalwerten, die außerhalb eines maximalen Messbereichsintervalls liegen, wird das Messergebnis weiter verbessert, da Ausreißer nicht mehr berücksichtigt werden.

Als Anzahl von Messsignalwerten, die oberhalb bzw. unterhalb des typischen Schwankungsintervalls liegen müssen ist, hat sich der Wert 3 herausgestellt.

In vorteilhafter Weise handelt es sich bei dem Filter um ein IIR(infinit impulse response) -Filter.

Eine typische Schwankungsintervallbreite liegt bei +/-3 Standardabweichungen. Dass in einem bestimmten Zeitintervall gleichzeitig mehrer Messsignalwerte außerhalb des Schwankungsintervalls und zwar sowohl über dem oberen Grenzwert des Schwankungsintervalls als auch unter dem unteren Grenzwert des Schwankungsintervalls liegen ist extrem unwahrscheinlich

Nachfolgend ist die Erfindung anhand eines in der Zeichnung dargestellten Ausführungsbeispiels näher erläutert.

### Es zeigen:

- Fig. 1: schematische Darstellung eines magnetisch induktiven Durchflussmessers;
- Fig. 2: Blockdiagramm zur Signalverarbenung;
- Fig. 3: Flussdiagramm des erfindungsgemäßen Verfahrens,

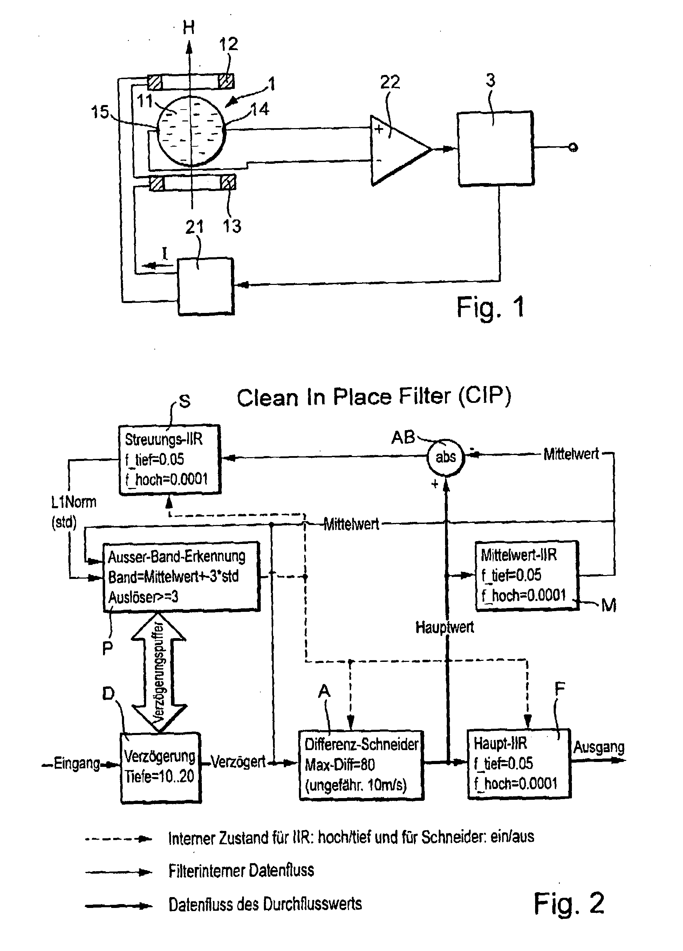

In Fig. 1 ist ein magnetisch induktiver Durchflussmesser 1 schematisch dargestellt, der aus dem eigentlichen magnetisch induktiven Sensor und einer Auswerteeinheit 3 besteht. Der Sensor umfasst ein Messrohr 11, indem das Messmedium fließt, eine Magnetanordnung mit zwei Feldspulen 12, 13 zur Erzeugung eines Magnetfeldes und vorzugsweise zwei gegenüberliegenden Messelektroden 14, 15. Die Feldspulen 12, 13 werden von einer Treiberelektronik 21, die von einer Auswerteschaltung 3 angesteuert wird, gespeist.

Die Messelektroden 14, 15 sind über einen Differenzverstärker 22 mit der Auswerteschaltung 3 verbunden. Der Differenzverstärker 22 liefert das eigentliche Messsignal u das dann in der Auswerteschaltung 3 ausgewertet wird. Die Auswertung erfolgt in üblicher Weise digitalisiert. Hierzu wird das Messsignal u in einem A/D-Wandler digitalisiert und in einem Mikrokontroller ausgewertet. Durch die Digitalisierung erhält man aus dem analogen Messsignal u eine Folge von Messsignalwerten, die im Mikrokontroller verarbeitet werden.

Nachfolgend ist das erfindungsgemäße Verfahren anhand des Blockschaltbildes gemäß Figur 2 näher erläutert. Wie bereits erwähnt, können bei bestimmten Bedingungen (Reinigungsprozedur) starke Messsignalschwankungen auftreten.
Diese Schwankungen werden im Wesentlichen durch die beim Mediumswechsel auftretenden Leitfähigkeitssprünge verursacht. So hat Bier eine andere Leitfähigkeit als ein CIP Reinigungsmedium.

Die digitalisierten Messsignalwerte werden einer Verzögerungseinheit D zugeführt. In der Verzögerungseinheit D werden die Messsignalwerte zwischengespeichert und um eine einstellbare Verzögerungszeit, die zwischen 10 und 20 Digitalisierungsschritten liegt, verzögert. Typische Wert für einen einzelnen Digitalisierungsschritt liegt bei 60 msec. Dieser Wert hängt u. a. vom Messrohrdurchmesser ab.

Die verzögerten Messsignalwerte werden einer Abschneideeinheit A zugeführt Im Normalbetrieb hat die Abschneideeinheit A keine Auswirkungen auf die Messsignalwerte. Die Messsignalwerte verlassen die Abschneideeinheit A unverändert. Auf die Funktion der Abschneideeinheit A wird deshalb erst später eingegangen.

Nach der Abschneideeinheit A werden die Messsignafwerte einem digitalen Filtereinheit F zugeführt. Die digitale Filtereinheit F arbeitet normaler Weise mit einer Dämpfungskonstanten D1. Bei der Filtereinheit F kann es sich z. B. um einen IIR (Infinit Impulse Response)- Filter IIR handeln, mit f_tief = 0.5 als Dämpfungskonstante D1. Unter bestimmten Bedingungen, die später näher erläutert werden, wird die Dämpfungskonstante auf einen Wert D2 (f_hoch = 0.005) geändert.

in einer Mittelwerteinheit M wird der Mittelwert der Messsignalwerte bestimmt.

Die Mittelwerte und die Messsignalwerte werden in einer Einheit AB voneinander abgezogen und der Absolutwert der Differenzbildung einer Standardabweichungseinheit S zugeführt.

In einer Standardabweichungseinheit S wird die Standardabweichung der Messsignalwerte vom Mittelwert bestimmt.

Beide Einheiten arbeiten jeweils als Filter mit zwei unterschiedlichen Filterkonstanten D1'und D2'. Auch hier ist es sinnvoll einen IIR-Filter zu verwenden.

Die Werte für D1' entsprechen f_tief=0.05 und D2' entsprechen f_hoch = 0.0001.

In einer Prüfeinheit P wird die Bedingung B geprüft, ob in einem vorgegebenen Zeitintervall mehr als eine vorliegende Anzahl A1 Messsignalwerte über dem oberen Grenzwert des Schwankungsintervalls liegen und gleichzeitig eine Anzahl A2 der Messsignalwerte unterhalb des unteren Grenzwertes Schwankungsintervalls liegen. Entsprechen dem vorgegebenen Zeitintervall 10 Messsignalwerte, so hat sich 3 als praktikabler Wert für die Anzahl A1 und A2 herausgestellt.

Die oberen und unteren Grenzwerte des Schwankungsintervalls werden über den Mittelwert +/- 3 Standardabweichungen bestimmt.
Innerhalb dieses Schwankungsintervalls liegen normalerweise die Messsignalwerte.

Wenn in der Prüfeinheit P feststellt wird, dass die Bedingung B erfüllt ist, so wird die Dämpfungskonstante für den Filter F von D1 auf D2 umgeschaltet. Gleichzeitig werden in der Mittelwerteinheit M und in der Standardabweichungseinheit S die Filterkonstanten D1' auf D2' umgeschaltet. Mit diesen Einstellungen kann auch beim Einsatz einer Reinigungsflüssigkeit noch ein sinnvolles Messergebnis erzeugt werden.

Zusätzlich werden in der Abschneideeinheit A alle Messsignalwerte, die außerhalb eines maximalen Messbereichsintervalls liegen abgeschnitten, d. h. die Messsignalwerte werden auf den Bereich Mittelwert +/- Maximalwert (Max-Diff) beschränkt. Ein typischer Wert für den Maximalwert ist 10 m/s. Diese Massnahme führt zu einer weiteren Verbesserung des Messergebnisses, weil völlig unmögliche Messignalwerte unterdrückt werden.

Durch die Bedingung B kann automatisch festgestellt werden, ob das normale Messmedium durch den magnetisch induktiven Durchflussmesser 1 fließt oder ob eine Reinigungsflüssigkeit fließt. Durch das Umschalten auf eine höhere Dämpfungskonstante bei der Messsignalverarbeitung, ist es möglich, auch bei der Reinigungsprozedur sinnvolle Messwerte zu erzeugen. Somit kann die Menge der verwendeten Reinigungsflüssigkeit einfach festgestellt und damit auch für eine spätere Überprüfung festgehalten werden.

Solange die Bedingung B erfüllt ist wird mit den an die Reinigungsflüssigkeit angepassten Konstanten (Dämpfungskonstante, Filterkonstante) gearbeitet.

Ist die Bedingung B nicht mehr erfüllt, so werden die Konstanten wieder auf ihre urspünglichen Werte gesetzt, und der normale Messbetrieb kann weiter erfolgen.
Auch dieses Umschalten geschieht automatisch.

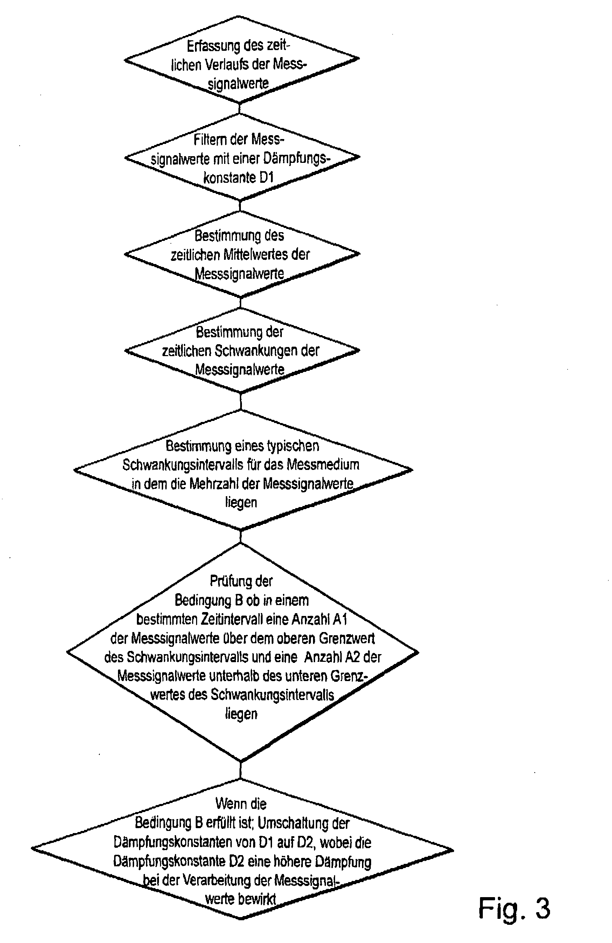

In Fig. 3 sind die einzelnen Verfahrensschritte des erfindungsgemäßen Verfahrens nochmals dargestellt.

## Patentansprüche

1. Verfahren zum Betreiben eines Magnetisch induktiven Durchftussmessers bei Messsignalschwankungen, im Wesentlichen verursacht durch bei einem Mediumswechsel auftretende Leitfähigkeitssprünge,
mit folgenden Verfahrensschritten:
a. Erfassung des zeitlichen Verlaufs der Messsignalwerte
b. Filtern der Messsignalwerte mit einer Dämpfungskonstante 01
c. Bestimmung des zeitlichen Mittelwertes der Messsignalwerte
d. Bestimmung der zeitlichen Schwankungen der Messsignalwerte
e. Bestimmung eines typischen Schwankungsintervalls für das Messmedium in dem die Mehrzahl der Messsignalwerte liegt, wobei das Schwankungsintervall +/-3 Standardabweichungen breit ist
f. Prüfung der Bedingung B ob in einem bestimmten Zeitintervall eine Anzahl A1 der Messsignalwerte über dem oberen Grenzwert des Schwankungsinteralls und eine Anzahl A2 der Messsignalwerte unterhalb des unteren Grenzwertes des Schwankungsintervalls liegen, wobei die Anzahl A1 und A2 jeweils 3 beträgt
g. Wenn die Bedingung B erfüllt ist;
h. Umschaltung der Dämpfungskonstanten von D1 auf D2, wobei die Dämpfungskonstante 02 eine höhere Dämpfung bei der Messwertfilterung bewirkt

2. Verfahren nach Anspruch 1, **dadurch gekennzeichnet, dass** die Messsignalwerte bevor sie gefiltert werden, auf ein maximales Messbereichsintervalls beschränkt werden, wobei Messsignalwerte die außerhalb des maximalen Messbereichsintervalls liegen, durch die entsprechenden oberen und unteren Grenzwerte des maximalen Messbereichsintervalls ersetzt werden.

3. Verfahren nach einem der vorhergehenden Ansprüche, **dadurch gekennzeichnet, dass** wenn die Bedingung B nicht mehr erfüllt ist, eine Umschalten der Dämpfungskonstante von D2 auf D1 erfolgt.

4. Verfahren nach einem der vorhergehenden Ansprüche, **dadurch gekennzeichnet, dass** die Filterung jeweils in einem IIR-Filter erfolg.

5. Verfahren nach einem der vorhergehenden Ansprüche, **dadurch gekennzeichnet, dass** solange die Bedingung B erfüllt ist, auf das Vorhandensein von Reinigungsflüssigkeit geschlossen wird und die Menge der Reinigungsflüssigkeit während dieses Zeitraums bestimmt wird.

## Claims

1. Procedure for operating an electromagnetic flowmeter in the event of measuring signal fluctuations, primarily caused by jumps in conductivity occurring when the medium changes,
comprising the following steps:
a. Recording of the sequence of the measuring signal values over time
b. Filtering of the measuring signal values with a damping constant D1
c. Determination of the mean value of the measuring signal values over time
d. Determination of the fluctuations of the measuring signal values over time
e. Determination of a typical fluctuation interval for the measuring medium in which the majority of the measuring signal values are found, wherein the fluctuation interval is +/- 3 standard deviations wide
f. Checking of condition B as to whether, in a certain time interval, a quantity A1 of the measuring signal values is above the upper limit value of the fluctuation interval and a quantity A2 of the measuring signal values is below the lower limit value of the fluctuation interval, wherein the quantity A1 and the quantity A2 is 3 in each case
g. If the condition B is met:
h. Changeover of the damping constants from D1 to D2, wherein the damping constant D2 causes a higher damping for measured value filtering

2. Procedure as claimed in Claim 1, **characterized in that** the measuring signal values are limited to a maximum measuring range interval before being filtered, wherein measuring signal values that are outside the maximum measuring range interval are replaced by the corresponding upper and lower limit values of the maximum measuring range interval.

3. Procedure as claimed in one of the previous claims, **characterized in that** when the condition B is no longer met, the damping constant is switched from D2 to D1.

4. Procedure as claimed in one of the previous claims, **characterized in that** filtering takes place in each case in an IIR filter.

5. Procedure as claimed in one of the previous claims, **characterized in that** as long as the condition B is met, it is possible to deduce the presence of cleaning liquid and the quantity of the cleaning liquid is determined during this period.

## Revendications

1. Procédé destinée à l'exploitation d'un débitmètre magnéto-inductif en cas de fluctuations du signal de mesure, occasionnées pour l'essentiel par des sauts de conductivité survenant lors d'un changement de produit,
avec les étapes de procédé suivantes :
a. Enregistrement de l'évolution dans le temps des valeurs de signal de mesure
b. Filtrage des valeurs de signal de mesure avec une constante d'amortissement D1
c. Détermination de la valeur moyenne temporelle des valeurs de signal de mesure
d. Détermination des fluctuations temporelles des valeurs de signal de mesure
e. Détermination d'un intervalle de fluctuation typique pour le moyen de mesure, intervalle dans lequel se situent la majorité des valeurs de signal de mesure, l'intervalle de fluctuation étant large de +/- 3 écarts-types
f. Contrôle de la condition B si, dans un intervalle de temps déterminé, un nombre A1 de valeurs de signal de mesure se situent au-dessus du seuil supérieur de l'intervalle de fluctuation et un nombre A2 de valeurs de signal de mesure se situent au-dessous du seuil inférieur de l'intervalle de fluctuation, le nombre A1 et le nombre A2 étant chacun égal à 3
g. Si la condition B est remplie :
h. Commutation des constantes d'amortissement de D1 vers D2, la constante d'amortissement D2 provoquant un amortissement supérieur lors du filtrage des valeurs mesurées

2. Procédé selon la revendication 1, **caractérisé en ce que** les valeurs de signal de mesure, avant qu'elles ne soient filtrées, sont limitées à un intervalle de gamme de mesure maximal, les valeurs de signal de mesure se trouvant en dehors de l'intervalle de gamme de mesure maximal étant remplacés par les seuils supérieur et inférieur correspondants de l'intervalle de gamme de mesure maximal.

3. Procédé selon l'une des revendications précédentes, **caractérisé en ce que**, lorsque la condition B n'est plus remplie, une commutation de la constante d'amortissement de D2 vers D1 a lieu.

4. Procédé selon l'une des revendications précédentes, **caractérisé en ce que** le filtrage s'effectue respectivement dans un filtre IIR.

5. Procédé selon l'une des revendications précédentes, **caractérisé en ce que**, tant que la condition B est remplie, on peut déduire la présence de liquide de nettoyage et la quantité de liquide de nettoyage est déterminée pendant cette période.
